(19) 

**Europäisches Patentamt**
**European Patent Office**
**Office européen des brevets**

(11) **EP 4 657 543 A1**

(12) **EUROPEAN PATENT APPLICATION**
published in accordance with Art. 153(4) EPC

(43) Date of publication:
**03.12.2025 Bulletin 2025/49**

(51) International Patent Classification (IPC):
*H01M 4/131* (2010.01)    *H01M 4/525* (2010.01)
*H01M 4/505* (2010.01)    *H01M 4/62* (2006.01)
*H01M 10/052* (2010.01)    *H01M 4/02* (2006.01)

(21) Application number: **24873030.1**

(52) Cooperative Patent Classification (CPC):
**H01M 4/02; H01M 4/131; H01M 4/505;
H01M 4/525; H01M 4/62; H01M 10/052;
Y02E 60/10**

(22) Date of filing: **27.09.2024**

(86) International application number:
**PCT/KR2024/014709**

(87) International publication number:
**WO 2025/071322 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 KR 20230131248**

(71) Applicant: **LG Energy Solution, Ltd.
Seoul 07335 (KR)**

(72) Inventors:
• **KIM, Young Jae
Daejeon 34122 (KR)**
• **PARK, Joo Yong
Daejeon 34122 (KR)**
• **LIM, Han Min
Daejeon 34122 (KR)**
• **PARK, Sang Hyun
Daejeon 34122 (KR)**
• **KIM, Cho Won
Daejeon 34122 (KR)**
• **KIM, Tae Gon
Daejeon 34122 (KR)**

(74) Representative: **Hoffmann Eitle
Patent- und Rechtsanwälte PartmbB
Arabellastraße 30
81925 München (DE)**

(54) **POSITIVE ELECTRODE AND LITHIUM SECONDARY BATTERY COMPRISING SAME**

(57)    The present invention relates to a positive electrode having a positive electrode mixture layer, including a single particle-type positive electrode active material and a point-type conductive material, disposed on a current collector, and having a rolling index, with single particle formation degree of a single particle-type lithium nickel-based oxide, and bulk density, BET specific surface area, and oil absorption number of a point-type conductive material as a factor, of 0.01 to 1.00, and the positive electrode exhibits a low porosity and a high rolling density, enabling a lithium secondary battery having excellent energy density.

**EP 4 657 543 A1**

**Description**

## TECHNICAL FIELD

The present invention relates to a positive electrode for a lithium secondary battery and a lithium secondary battery including the same, and more particularly, to a positive electrode exhibiting a low porosity and a high rolling density and a lithium secondary battery including the same.

## BACKGROUND ART

Lithium secondary batteries are typically provided with a positive electrode, a negative electrode, a separator, and an electrolyte, and the positive electrode and the negative electrode include active materials enabling intercalation/deintercalation of lithium ions.

Lithium cobalt oxide ($LiCoO_2$), lithium nickel oxide ($LiNiO_2$), lithium manganese oxide ($LiMnO_2$, $LiMnO_4$, or the like), lithium iron phosphate compound ($LiFePO_4$), and the like have been used as a positive electrode active material for lithium secondary batteries. Among those listed above, the lithium cobalt oxide has high operating voltage and excellent capacity characteristics, but it is difficult to commercially apply the lithium cobalt oxide to large-capacity batteries because cobalt, which is a raw material of the lithium cobalt oxide, is expensive and unstably supplied. The lithium nickel oxide has poor structural stability, and thus is hardly provided with sufficient lifespan. Meanwhile, the lithium manganese oxide has excellent stability but comes with poor capacity. Accordingly, lithium nickel-based oxides including at least two types of transition metals have been developed to compensate for the limitations of lithium transition metal oxides including Ni, Co, or Mn alone, and particularly, lithium nickel cobalt manganese oxides including Ni, Co, and Mn have been widely used in the field of batteries for electric vehicles.

Meanwhile, in addition to using a high-capacity positive electrode active material, materials included in the positive electrode are of vital importance for achieving batteries with high energy density. To this end, research efforts are underway to make the most use of active material and to make the least use of conductive material and binder. In a typical example of using CNT as a conductive material, the CNTs are linearly positioned between active materials, allowing for easy achievement of conductivity with a small amount, which maximizes a loading amount of the active material.

However, the CNTs, under at least a certain pressure during electrode rolling, damage the active material, and reducing the rolling density to create space for linear CNTs between the active materials and thus to prevent damage to the active material results in a thicker electrode with higher porosity, which hinders the increase of energy density.

Accordingly, research is required to develop a positive electrode having reduced porosity and increased rolling density without any damage to active materials.

## DISCLOSURE OF THE INVENTION

## TECHNICAL PROBLEM

The present invention is designed to overcome the limitations described above, and thus, an aspect of the present invention provides a positive electrode exhibiting excellent rolling density and low porosity through a combination of a single particle-type positive electrode active material and a point-type conductive material such as carbon black, particularly a point-type conductive material having a large specific surface area and an excellent secondary structure.

An aspect of the present invention also provides a lithium secondary battery exhibiting improved energy density, including the positive electrode described above.

## TECHNICAL SOLUTION

[1] According to an aspect of the present invention, there is provided a positive electrode having a positive electrode mixture layer, including a single particle-type positive electrode active material and a point-type conductive material, disposed on a current collector, and having a rolling index of 0.01 to 1.00, indicated by Equation 1 below.

$$[\text{Equation 1}]$$

$$RI = [(D_{50}/D_{mean}) \times B_c] / (S_c \times O_c) \times 10^5$$

in Equation 1 above, $D_{mean}$ is an average particle size ($\mu$m) of nodules measured from a scanning electron microscope image of the single particle-type positive electrode active material, $D_{50}$ is an average particle size ($\mu$m) at 50% cumulative volume in a particle size distribution graph obtained through a laser diffraction method for the single particle-type positive electrode active material, $B_c$ is a bulk density of carbon black, given as a unitless number without a bulk density unit of $g/cm^3$, $S_c$ is a BET specific surface area of carbon black, given as a unitless number without a specific surface area unit of $m^2/g$, and $O_c$ is an oil absorption number (OAN) of carbon black, given as a unitless number without an oil absorption number unit of ml/100 g.

[2] The present invention provides the positive electrode according to [1] above, wherein the single particle-type positive electrode active material may have a $D_{50}$ of 2.0 $\mu$m to 6.0 $\mu$m.

[3] The present invention provides the positive electrode according to [1] and/or [2] above, wherein the single particle-type positive electrode active material may have a $D_{mean}$ of 0.2 $\mu$m to 3.0 $\mu$m.

[4] The present invention provides the positive electrode according to at least one of [1] to [3] above, wherein the single particle-type positive electrode active material may have a $D_{50}/D_{mean}$ of 1 to 10.

[5] The present invention provides the positive electrode according to at least one of [1] to [4] above, wherein the point-type conductive material may have a BET specific surface area of 300 $m^2/g$ to 1300 $m^2/g$.

[6] The present invention provides the positive electrode according to at least one of [1] to [5] above, wherein the point-type conductive material may have an oil absorption number of 250 ml/100 g to 500 ml/100 g.

[7] The present invention provides the positive electrode according to at least one of [1] to [6] above, wherein the point-type conductive material may have a bulk density of 0.05 $cm^3/g$ to 0.14 $cm^3/g$.

[8] The present invention provides the positive electrode according to at least one of [1] to [7] above, wherein the single particle-type positive electrode active material may include at least one selected from the group consisting of a lithium nickel-based oxide and a lithium metal phosphate-based compound, the lithium nickel-based oxide may have a composition represented by Formula 1 below, and the lithium metal phosphate-based compound may have a composition represented by Formula 2 below.

$$\text{[Formula 1]} \qquad Li_{1+x}Ni_aCo_bM^1_cM^2_dO_{2-e}X_e$$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

$$\text{[Formula 2]} \qquad Li_{1+x}[Fe_{1-y}M_y]PO_4$$

In Formula 2 above, M includes at least one selected from the group consisting of Mn, Co, Ni, Al, Mg, and Ti, and x and y satisfy $-0.5 \leq x \leq 0.5$ and $0 \leq y < 1$.

[9] The present invention provides the positive electrode according to at least one of [1] to [8] above, wherein the point-type conductive material may be carbon black.

[10] The present invention provides the positive electrode according to at least one of [1] to [9] above, wherein the positive electrode may have a porosity of 12.0% to 22.0%.

[11] The present invention provides the positive electrode according to at least one of [1] to [10] above, wherein the single particle-type lithium nickel-based oxide may be provided in an amount of 93.0 wt% to 99.0 wt% with respect to a total weight of the positive electrode mixture layer.

[12] The present invention provides the positive electrode according to at least one of [1] to [11] above, wherein the positive electrode mixture layer may further include a binder.

[13] According to another aspect of the present invention, there is provided a lithium secondary battery including the positive electrode according to the present invention.

## ADVANTAGEOUS EFFECTS

A positive electrode according to the present invention employs a combination of a single particle-type positive electrode active material in the form of a single particle and/or a quasi-single particle having excellent particle strength, and a point-type conductive material having a large specific surface area and an excellent secondary structure, and thus disperse external force applied to the active material particles even during high pressure rolling, resulting in reduced particle breakage, crack formation, fine particles, and porosity.

In addition, a lithium secondary battery according to the present invention includes the positive electrode exhibiting high rolling density and low porosity as described above, and thus have improved energy density, and reduced cracking or breakage of active material particles leading to reduced side reactions with an electrolyte, resulting in less gas generation and improved lifespan characteristics.

## MODE FOR CARRYING OUT THE INVENTION

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, it will be further understood that the terms "include," "comprise," or "have" specify the presence of stated features, numbers, steps, elements, or combinations thereof, but do not preclude the presence or addition of one or more other features, numbers, steps, elements, or combinations thereof.

Herein, the term "single particle-type" is a type of particle consisting of 30 nodules or less, and a single particle-type particle encompasses a single particle consisting of a single nodule as well as a quasi-single particle which is a composite of 2 to 30 nodules.

The term "nodule" indicates a lower particle unit body constituting a single particle and a quasi-single particle, and may be a single crystal lacking crystalline grain boundaries or may be a polycrystal in which grain boundaries are not present when observed in a field of view of 5000$\times$ to 20000$\times$ using a scanning electron microscope.

Herein, the term "secondary particle" indicates a particle formed by aggregation of a plurality several tens to several hundreds of primary particles. More specifically, the secondary particle is an aggregate of at least 50 primary particles.

Herein, when the term "particle" is described, any one or all of a single particle, a quasi-single particle, a primary particle, a nodule, and a secondary particle may be encompassed.

Herein, "$D_{mean}$" is calculated by taking an average value of the particle sizes of individual nodules in approximately 30 particles containing at least one nodule, as determined by scanning electron microscopy (SEM) of positive electrode active material particles.

Herein, the term "$D_{50}$" indicates a particle size with respect to 50% in the volume accumulated particle size distribution of positive electrode active material powder. The average particle size $D_{50}$ may be measured using a laser diffraction method. For example, the average particle size $D_{50}$ may be measured in a way that the positive electrode active material powder is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle size at 50% of the volume accumulation is calculated.

Herein, a "specific surface area ($m^2/g$)" is measured through a BET method, and specifically may be calculated from an amount of nitrogen gas adsorbed at a liquid nitrogen temperature (77 K) using BELSORP-mino II from BEL JAPAN, INC.

Herein, the term "bulk density ($g/cm^3$)" indicates a mass (g)-to-volume ($cm^3$) ratio of a point-type conductive material, measured under no external force applied.

Herein, the term "oil absorption number" of a point-type conductive material indicates a value determined through a method described in JIS K6221-B using DBP (dibutyl phthalate) as oil and converted to an equivalent value under JIS K6217-4:2008 according to Equation (a).

$$[\text{Equation (a)}]$$

$$DBP\ absorption\ =\ (A-10.974)/0.7833$$

In Equation (a), A indicates a value of DBP absorption measured through a method described in JIS K6221-B.

Hereinafter, the present invention will be described in more detail.

A positive electrode and a lithium secondary battery according to the present invention may include at least one of the following components, and may include any combination of technically feasible components among the following components.

## Positive electrode

A positive electrode according to the present invention has a positive electrode mixture layer, including a single particle-type positive electrode active material and a point-type conductive material, disposed on a current collector, and having a rolling index of 0.01 to 1.00, indicated by Equation 1 below.

[Equation 1]

$$RI = [(D_{50}/D_{mean}) \times B_c] / (S_c \times O_c) \times 10^5$$

In Equation 1 above, $D_{mean}$ is an average particle size (μm) of nodules measured from a scanning electron microscope image of the single particle-type positive electrode active material, $D_{50}$ is an average particle size (μm) at 50% cumulative volume in a particle size distribution graph obtained through a laser diffraction method for the single particle-type positive electrode active material, $B_c$ is a bulk density of the point-type conductive material, given as a unitless number without a bulk density unit of $g/cm^3$, $S_c$ is a BET specific surface area of the point-type conductive material, given as a unitless number without a specific surface area unit of $m^2/g$, and $O_c$ is an oil absorption number (OAN) of the point-type conductive material, given as a unitless number without an oil absorption number unit of ml/100 g.

*Rolling index*

According to an embodiment of the present invention, the positive electrode has a positive electrode mixture layer, including a single particle-type positive electrode active material and a point-type conductive material, disposed on a current collector, and has a rolling index of 0.01 to 1.00, indicated by Equation 1 above. The rolling index is attributed to properties of the single particle-type positive electrode active material and the point-type conductive material included in the positive electrode, and particularly attributed to factors affecting the rolling density and porosity of the positive electrode from the properties of each material.

Specifically, to achieve a high energy density positive electrode, increasing a loading amount of active material is generally applied, and typically carbon nanotubes, which provides conductivity even at low loadings, have been used to reduce an amount of conductive material and increase an amount of active material. However, in this case, an electrode thickness is hardly controllable due to the length characteristics of carbon nanotubes, and increasing rolling pressure inevitably damages the active material, resulting in an insignificant improvement in energy density, even though a high-loading positive electrode is achievable.

However, according to an embodiment of the present invention, the positive electrode employs a combination of a single particle-type or quasi-single particle-type positive electrode active material and a point-type conductive material having a large specific surface area, and defines relationships between specific factors from the characteristics of each material, and thus be achieved as a positive electrode having improved energy density without damage to active material particles.

Specifically, the rolling index is indicated by Equation 1 below and ranges from 0.01 to 1.00.

[Equation 1]

$$RI = [(D_{50}/D_{mean}) \times B_c] / (S_c \times O_c) \times 10^5$$

In Equation 1 above, $D_{mean}$ is an average particle size (μm) of nodules measured from a scanning electron microscope image of the single particle-type positive electrode active material, $D_{50}$ is an average particle size (μm) at 50% cumulative volume in a particle size distribution graph obtained through a laser diffraction method for the single particle-type positive electrode active material, $B_c$ is a bulk density of the point-type conductive material, given as a unitless number without a bulk density unit of $g/cm^3$, $S_c$ is a BET specific surface area of the point-type conductive material, given as a unitless number without a specific surface area unit of $m^2/g$, and $O_c$ is an oil absorption number (OAN) of the point-type conductive material, given as a unitless number without an oil absorption number unit of ml/100 g.

$D_{50}/D_{mean}$ included as a factor in the rolling index may be termed as single particle formation degree, indicating that particles of the single particle-type positive electrode active material are not in the form of a secondary particle in which tens to hundreds of primary particles are aggregated. A lower ratio thereof indicates that the positive electrode active material is more likely to be in a single particle or quasi-single particle form, and increased particle strength allows the positive electrode active material to withstand higher rolling pressures without damage.

In addition, the bulk density and oil absorption number of the point-type conductive material are properties related to a secondary structure of the point-type conductive material, where a lower bulk density indicates a more uniform and bulky structure, while a higher oil absorption number indicates a greater ability to hold an electrolyte and a larger secondary structure. That is, the characteristics of the secondary structure of the point-type conductive material are ultimately a measure of how well the point-type conductive material is disposed between the single particle-type positive electrode active material particles to minimize pores, and a lower bulk density and a higher oil absorption number indicate a better secondary structure of the point-type conductive material.

Furthermore, the specific surface area of the point-type conductive material may indicate the number of point-type conductive materials per unit mass, and a greater number of point-type conductive materials may indicate that the point-type conductive materials may be more effectively disposed in the pores within the positive electrode.

The rolling index according to an embodiment of the present invention is derived by considering the relationship of the factors as described above, and a greater number of point-type conductive materials per unit mass is beneficial for filling pores, but the fact that there are many point-type conductive materials per unit mass may indirectly be attributed to a smaller secondary structure, and when the secondary structure of the point-type conductive material is, though bulky, not densely formed, the bulk density may be low, but the oil absorption number may also be low due to a reduced ability to retain an electrolyte. That is, the present invention derives the rolling index by considering the characteristics of the point-type conductive material having such a complex relationship.

In addition, even when the point-type conductive material satisfies all conditions and the relationships thereof are well established, using an active material that hardly withstands high rolling pressure and is easily damaged may prevent the achieving of a high energy density electrode, and thus the relationship was completed by reflecting the particle size characteristics of an active material, that is, the single particle-type positive electrode active material, in the rolling index.

The rolling index determined by Equation 1 above may range from 0.01 to 1.00, may preferably be 0.03 or more, 0.05 or more, 0.08 or more, 0.10 or more, 0.15 or more, or 0.20 or more, and may be 0.95 or less, 0.90 or less, 0.85 or less, 0.80 or less, 0.75 or less, 0.70 or less, 0.65 or less, or 0.60 or less.

When the rolling index is less than 0.01, the secondary structure formed by the bulk density and oil absorption number of the point-type conductive material is too bulky, and thus the conductive material itself may have a high porosity, may not be well disposed in the voids that may be formed in the positive electrode, and even when well disposed, may have a structure that hardly fills micro-pores, so rather, the porosity of the electrode may not be lowered, which indicates that the energy density may not be improved. In addition, when the rolling index is greater than 1.00, the specific surface area of the point-type conductive material is insufficient, thereby hardly increasing the rolling density and thus failing to lower the porosity of the electrode, and the conductive material particles may not be well disposed between the single particle-type positive electrode active material particles, hardly obtaining conductivity. In addition, since the particle size characteristics of the positive electrode active material are closer to secondary particles than to single particles, high rolling pressure may cause particle damage, leading to increased fine particles and reduced capacity.

Hereinafter, each factor included in the rolling index relationship will be described.

*Positive electrode active material*

According to an embodiment of the present invention, the single particle-type positive electrode active material may have a single particle formation degree ($D_{50}/D_{mean}$) of 1 to 10. The single particle-type positive electrode active material has greater particle strength than typical secondary particle-type positive electrode active materials in which tens to hundreds of primary particles are aggregated, thereby less particle breakage during rolling. In addition, since the single particle-type positive electrode active material has a small number of sub-parts (i.e. nodules) constituting particles, changes resulting from the volume expansion/contraction of primary particles during charging and discharging are small, and accordingly, the generation of cracks inside the particles is substantially reduced.

A lower single particle formation degree suggests that particles are more likely to be single particles or quasi-single particles consisting of a few nodules. Accordingly, the single particle formation degree may preferably range from 1 to 8, 1 to 7, 1 to 6, or 1 to 5, and when the above range is satisfied, particle breakage may be reduced and rolling density may be improved, and thus both lifespan characteristics and energy density may be expected to be improved.

According to an embodiment of the present invention, the single particle-type positive electrode active material may have a $D_{50}$ of 2.0 $\mu$m to 6.0 $\mu$m.

The single particle-type positive electrode active material may have an average particle size at 50% cumulative volume of 2.0 $\mu$m to 6.0 $\mu$m, preferably 2.3 $\mu$m or more, 2.5 $\mu$m or more, 2.7 $\mu$m or more, 3.0 $\mu$m or more, or 3.5 $\mu$m or more, and may be 6.0 $\mu$m or less, 5.8 $\mu$m or less, 5.5 $\mu$m or less, or 5.0 $\mu$m or less. When $D_{50}$ of the single particle-type positive electrode active material satisfies the above range, rolling density may be increased without damage to active material particles.

According to an embodiment of the present invention, the nodule of the single particle-type positive electrode active material may have an average particle size ($D_{mean}$) of 0.2 $\mu$m to 3.0 $\mu$m, and the nodule may preferably have an average particle size of 0.5 $\mu$m or more, 0.7 $\mu$m or more, or 1.0 $\mu$m or more, and an average particle size of 2.8 $\mu$m or less, 2.5 $\mu$m or less, or 2.0 $\mu$m or less, and when the above range is satisfied, the single particle formation degree range may be satisfied, and thus an effect may be expected accordingly.

The single particle-type positive electrode active material according to the present invention may include at least one selected from the group consisting of a lithium nickel-based oxide and a lithium metal phosphate-based compound.

For example, the lithium nickel-based oxide may have a composition represented by Formula 1 below.

[Formula 1]  $Li_{1+x}Ni_aCo_bM^1_cM^2_dO_{2-e}X_e$

In Formula 1 above, $M^1$ includes at least one selected from Mn and Al, $M^2$ includes at least one selected from the group consisting of W, Zr, Y, Ba, Ca, Ti, V, Mg, Ta, and Nb, X includes at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$.

In Formula 1 above, $M^1$ may be Mn, Al or a combination thereof, preferably Mn or a combination of Mn and Al, and $M^2$ may be at least one selected from the group consisting of Zr, W, Y, Ba, Ca, Ti, Mg, Ta and Nb, preferably at least one selected from the group consisting of Zr, Y, Mg, and Ti, and more preferably Zr, Y, or a combination thereof. Although the $M^2$ element is not necessarily included, when an appropriate amount of the $M^2$ element is included, it may serve to promote grain growth during firing or enhance the stability of a crystal structure. In addition, X is an anion substituted for an oxygen site and may include N, P, S, F, or Cl.

$1+x$ indicates a mole ratio of lithium in the lithium nickel-based oxide, and x may satisfy $0 \leq x \leq 0.1$, $0 \leq x \leq 0.08$, $0 \leq x \leq 0.05$, $0 \leq x \leq 0.03$, or $0 \leq x \leq 0.02$.

a indicates a molar ratio of nickel among total metals excluding lithium in the lithium nickel-based oxide, and may satisfy $0.50 \leq a < 1.00$, $0.60 \leq a \leq 0.99$, $0.70 \leq a \leq 0.99$ or $0.75 \leq a \leq 0.99$, $0.80 \leq a \leq 0.99$, $0.82 \leq a \leq 0.99$, $0.84 \leq a \leq 0.99$, or $0.86 \leq a \leq 0.99$.

b indicates a mole ratio of cobalt among total metals excluding lithium in the lithium nickel-based oxide, and may satisfy $0 < b \leq 0.35$, $0.01 \leq b \leq 0.34$, $0.01 \leq b \leq 0.30$, $0.01 \leq b \leq 0.25$, $0.01 \leq b \leq 0.20$, or $0.01 \leq b \leq 0.15$.

c indicates a mole ratio of $M^1$ among total metals excluding lithium in the lithium nickel-based oxide, and may satisfy $0 < c \leq 0.35$, $0.01 \leq c \leq 0.34$, $0.01 \leq c \leq 0.30$, $0.01 \leq c \leq 0.25$, $0.01 \leq c \leq 0.20$, or $0.01 \leq c \leq 0.15$.

d indicates a mole ratio of $M^2$ element among total metals excluding lithium in the lithium nickel-based oxide and may satisfy $0 \leq d \leq 0.05$, $0 \leq d \leq 0.02$, or $0 \leq d \leq 0.01$.

e indicates a mole ratio of X element among total non-metals excluding oxygen in the lithium nickel-based oxide and may satisfy $0 \leq e \leq 0.05$, $0 \leq e \leq 0.02$, or $0 \leq e \leq 0.01$.

Meanwhile, the lithium nickel-based oxide may further include a coating layer including at least one coating element selected from the group consisting of Al, Ti, W, B, F, P, Mg, Ni, Co, Fe, Cr, V, Cu, Ca, Zn, Zr, Nb, Mo, Sr, Sb, Bi, Si, and S, on a particle surface.

When a coating layer is provided on a surface of single particle-type lithium nickel-based oxide particles, contact between an electrolyte and the single particle-type lithium nickel-based oxide is suppressed by the coating layer, thereby reducing transition metal elution or gas generation resulting from side reactions with the electrolyte.

Preferably, the coating layer may include Co as a coating element. When a coating layer including Co is formed on a surface of single particle-type lithium nickel-based oxide particles, side reactions with an electrolyte may be suppressed and output may be improved.

In addition, the lithium metal phosphate-based compound may have a composition represented by Formula 2 below.

$$[\text{Formula 2}] \qquad Li_{1+x}[Fe_{1-y}M_y]PO_4$$

In Formula 2 above, M includes at least one selected from the group consisting of Mn, Co, Ni, Al, Mg, and Ti, and x and y satisfy $-0.5 \leq x \leq 0.5$ and $0 \leq y < 1$.

The lithium metal phosphate-based compound may be doped with M above. In this case, a lattice structure and distance within an olivine crystal structure, which is a crystal structure, are altered, leading to an increase in diffusion of lithium ions, and consequently improving the electrochemical characteristics of batteries including the positive electrode active material.

x may range from -0.5 to 0.5, may preferably be -0.3 or more, -0.1 or more, or 0 or more, and may be 0.5 or less, 0.4 or less, 0.3 or less, 0.2 or less, or 0.1 or less.

y may be 0 or more and less than 1, and may be 0.90 or less, 0.80, or less, 0.70 or less, 0.60 or less, 0.50 or less, 0.40 or less, 0.30 or less, 0.20 or less, 0.10 or less, or 0.05 or less.

The lithium metal phosphate-based compound may be, for example, $LiFePO_4$.

The lithium metal phosphate-based compound according to the present invention may be in the form of a single particle consisting of only one primary particle, or in the form of an irregular secondary particle consisting of 2 to 50 primary particles. In addition, the lithium metal phosphate-based compound may include an olivine structure, and specifically, may be formed of only an olivine structure. The coating layer according to the present invention may be formed not only on the secondary particle but also on the primary particle. That is, the coating layer according to the present invention may be uniformly present on a surface of the primary particle present inside the secondary particle.

The coating layer may include a carbon coating layer having a graphite structure, and the coating layer may have a thickness of 0.5 nm to 5 nm. When the thickness of the coating layer is within the above range, electrical conductivity is improved and also the entry and exit of lithium ions is not hindered. Specifically, the coating layer may have a thickness of 0.5 nm or more, 1.0 nm or more, 1.5 nm or more, 2.0 nm or more, 2.5 nm or more, or 3.0 nm or more, and a thickness of 5.0 nm or less.

The coating layer may be uniformly applied onto a surface of the lithium metal phosphate-based compound. That is, the coating layer may be in the form of a thin film. The coating layer may improve ion conductivity and electronic conductivity during charging and discharging of a battery including a positive electrode active material. The coating layer may contain impurities such as nitrogen, oxygen, and hydrogen in trace amounts in addition to carbon.

The coating layer may be included in an amount of 0.5 wt% to 3 wt% with respect to a total weight of the lithium metal phosphate-based compound so as to improve electrical conductivity and not to hinder the entry and exit of lithium ions.

*Point-type conductive material*

The positive electrode according to an embodiment of the present invention may include a point-type conductive material, and the point-type conductive material may include carbon black, and the carbon black may be, for example, at least one selected from the group consisting of acetylene black, Ketjen black, channel black, furnace black, lamp black, and thermal black. In general, single particle-type positive electrode active materials use carbon nanotubes provided with high particle strength and conductivity that may be easily obtained even at a small amount for increasing loading. However, carbon nanotubes are damaged under high rolling pressure despite strong particle strength thereof as described above, and thus are not suitable for the positive electrode intended to be achieved in the present invention. Therefore, the positive electrode of the present invention may not include carbon nanotubes.

According to an embodiment of the present invention, the point-type conductive material is a material that significantly affects the setting of the rolling index relationship, and as described above, BET specific surface area, bulk density, and oil absorption number may be major factors.

The point-type conductive material may have a BET specific surface area of 290 $m^2/g$ to 1300 $m^2/g$ measured through a BET method, and specifically may be calculated from an amount of nitrogen gas adsorbed at a liquid nitrogen temperature (77 K) using BELSORP-mino II from BEL JAPAN, INC. Preferably, the point-type conductive material may have a BET specific surface area of 300 $m^2/g$ or more, 330 $m^2/g$ or more, 370 $m^2/g$ or more, 400 $m^2/g$ or more, 420 $m^2/g$ or more, 440 $m^2/g$ or more, 460 $m^2/g$ or more, 480 $m^2/g$ or more, or 500 $m^2/g$ or more, and further 1200 $m^2/g$ or less, 1100 $m^2/g$ or less, or 1000 $m^2/g$ or less, 950 $m^2/g$ or less, 900 $m^2/g$ or less, or 880 $m^2/g$ or less.

The specific surface area is a factor that greatly affects the specifying of the rolling index, and a greater specific surface area is preferable. Typically, a point-type conductive material having a specific surface area of 100 $m^2/g$ to 200 $m^2/g$ is applied, and a point-type conductive material having a specific surface area as high as 250 $m^2/g$ is generally applied, and for applications requiring a high specific surface area conductive material, linear conductive materials such as carbon nanotubes are commonly used considering conductivity per unit mass. However, the rolling index according to an embodiment of the present invention is achievable only when a point-type conductive material having a large specific surface area, not a linear conductive material, is applied, and this may thus be a factor that may minimize pores in the positive electrode.

In addition, the point-type conductive material may have a bulk density of 0.05 $cm^3/g$ to 0.14 $cm^3/g$, and the bulk density indicates a mass (g)-to-volume ($cm^3$) ratio of the point-type conductive material, measured under no external force applied. Preferably, the point-type conductive material may have a bulk density of 0.06 $cm^3/g$ or more, 0.08 $cm^3/g$ or more, 0.09 $cm^3/g$ or more, or 0.10 $cm^3/g$ or more, and further 0.135 $cm^3/g$ or less, 0.132 $cm^3/g$ or less, or 0.13 $cm^3/g$ or less. When the bulk density satisfies the above range, the point-type conductive material is considered to have a secondary structure that may be positioned between active material particles, which may contribute to reducing porosity and increasing rolling density.

In addition, the point-type conductive material may have an oil absorption number of 250 ml/100 g to 500 ml/100 g, and the oil absorption number indicates a value determined through a method described in JIS K6221-B using DBP (dibutyl phthalate) as oil and converted to an equivalent value under JIS K6217-4:2008 according to Equation (a).

$$[Equation\ (a)]$$

$$DBP\ absorption = (A-10.974)/0.7833$$

In Equation (a), A indicates a value of DBP absorption measured through a method described in JIS K6221-B.

The oil absorption number may preferably be 260 ml/100 g or more, 270 ml/100 g or more, 280 ml/100 g or more, 290 ml/100 g or more, or 300 ml/100 g or more, and may be 495 ml/100 g or less, 490 ml/100 g or less, 485 ml/100 g or less, or 480 ml/100 g or less, and when the above ranges are satisfied, conditions for a dense and bulky secondary structure may be achieved, which not only enhances electrolyte retention but also disperses external forces exerted on active material particles under high rolling pressure.

*Composition of positive electrode*

The positive electrode according to the present invention may include a single particle-type positive electrode active material and a point-type conductive material as described above, and may further include a binder, and the positive electrode active material, the point-type conductive material, and the binder may form a positive electrode mixture layer, and the positive electrode mixture layer may be formed on a positive electrode current collector.

In this case, the positive electrode active material may be included in an amount of 90 wt% to 99 wt%, more specifically 93 wt% or more, 95 wt% or more, 96 wt% or more, or 97 wt% or more, and 98.5 wt% or less, or 98 wt% or less, with respect to a total weight of the positive electrode mixture layer, and may exhibit excellent capacity characteristics when included in the above range.

In addition, the point-type conductive material may be included in an amount of 0.1 wt% to 10 wt%, preferably 0.3 wt% or more, 0.5 wt% or more, 0.7 wt% or more, or 1.0 wt% or more, and further, 9.0 wt% or less, 8.5 wt% or less, 8.0 wt% or less, 7.5 wt% or less, 7.0 wt% or less, or 6.5 wt% or less, with respect to a total weight of the positive electrode mixture layer.

According to an embodiment of the present invention, the positive electrode may further include a binder. The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, styrene-butadiene rubber (SBR), fluorine rubber, polyacrylic acid, and a polymer obtained by substituting hydrogen of the above materials with Li, Na, or Ca, or various copolymers, and any one thereof or a mixture of two or more thereof may be used. The binder may be included in an amount of 0.1 wt% to 10 wt%, preferably 0.3 wt% or more, 0.5 wt% or more, 0.7 wt% or more, or 1.0 wt% or more, and further 9.0 wt% or less, 8.5 wt% or less, 8.0 wt% or less, 7.5 wt% or less, 7.0 wt% or less, or 6.5 wt% or less, with respect to a total weight of the positive electrode mixture layer.

The positive electrode current collector may include a highly conductive metal and is not particularly limited as long as the positive electrode mixture layer easily adheres thereto and the positive electrode current collector has no reactivity in the voltage range of a battery. As the positive electrode current collector, for example, stainless steel, aluminum, nickel, titanium, thermally treated carbon, aluminum or stainless steel whose surface has been treated with carbon, nickel, titanium, silver, or the like may be used. In addition, the positive electrode current collector may typically have a thickness of 3 to 500 μm, and fine irregularities may be formed on a surface of the current collector to improve the adhesion of a positive electrode active material. For example, the positive electrode current collector may be used in various forms such as a film, a sheet, a foil, a net, a porous body, a foam body, and a non-woven fabric body.

The positive electrode may be prepared according to a typical method of preparing a positive electrode except that the positive electrode active material powder described above is used. Specifically, a positive electrode slurry composition prepared by dissolving or dispersing the positive electrode active material powder, and if necessary, optionally dissolving or dispersing a binder, a conductive material, and a dispersant in a solvent, is applied onto the positive electrode current collector, and then dried and rolled to prepare the positive electrode.

The solvent may be a solvent commonly used in the art, and may be dimethyl sulfoxide (DMSO), isopropyl alcohol, N-methylpyrrolidone (NMP), dimethyl formamide (DMF), acetone, water, or the like, and any one thereof or a mixture of two or more thereof may be used. The amount of the solvent to be used is sufficient if the solvent may dissolve or disperse the positive electrode active material, the conductive material, the binder, and the dispersant in consideration of the applying thickness of the slurry and preparation yield, and thereafter, have a viscosity which may exhibit excellent thickness uniformity upon application for the preparation of the positive electrode.

In addition, in another method, the positive electrode may be prepared by casting the positive electrode slurry composition on a separate support and then laminating a film separated from the support on the positive electrode current collector.

**Lithium secondary battery**

Next, a lithium secondary battery according to the present invention will be described. A lithium secondary battery according to the present invention includes the positive electrode of the present invention described above.

Specifically, the lithium secondary battery includes a positive electrode, a negative electrode positioned to face the positive electrode, a separator interposed between the positive electrode and the negative electrode, and an electrolyte. The positive electrode is the same as that described above, and thus, a detailed description thereof will be omitted. Hereinafter, only the rest of the components will be described in detail.

In addition, the lithium secondary battery may selectively further include a battery case for accommodating an electrode assembly composed of the positive electrode, the negative electrode, and the separator, and a sealing member for sealing the battery case.

In the lithium secondary battery, the negative electrode may include a negative electrode current collector and a negative electrode mixture layer placed on the negative electrode current collector, and the negative electrode mixture layer may include a negative electrode active material, a binder, and a conductive material.

The negative electrode current collector is not particularly limited as long as it has a high conductivity without causing chemical changes in batteries. For example, copper, stainless steel, aluminum, nickel, titanium, heat treated carbon, copper or stainless steel that is surface-treated with one of carbon, nickel, titanium, silver, and the like, an aluminum-cadmium alloy, and the like may be used.

The negative electrode current collector may typically have a thickness of 3 $\mu$m to 500 $\mu$m, and preferably may have a thickness of 300 $\mu$m or less, 200 $\mu$m or less, 100 $\mu$m or less, or 80 $\mu$m or less. The current collector may have fine irregularities formed on a surface thereof to improve bonding strength with a negative electrode active material. For example, the current collector may be used in various forms such as a film, a sheet, a foil, a net, a porous body, a foam body, and a non-woven fabric body.

A compound capable of reversibly intercalating and deintercalating lithium may be used as the negative electrode active material, and examples thereof may be a carbonaceous material such as artificial graphite, natural graphite, Kish graphite, pyrolytic carbon, meso-carbon microbeads, mesophase pitches, petroleum or coal tar pitch derived cokes, mesophase pitch based carbon fiber, graphitized carbon fiber, amorphous carbon, soft carbon, or hard carbon; a (semi) metallic material alloyable with lithium such as Si, Al, Sn, Pb, Zn, Bi, In, Mg, Ga, Cd, Si alloy, Sn alloy, or Al alloy; a (semi) metallic oxide material which may be doped and dedoped with lithium such as $SiO_b$ (0<b≤2), $SnO_2$, vanadium oxide, and lithium vanadium oxide; a heterogeneous composite material such as SiC composite or Sn-C composite; or a metal lithium thin film, and any one thereof or a mixture of two or more thereof may be used.

Preferably, the negative electrode active material may include at least one selected from the group consisting of a silicon-based active material, a carbon-based active material, and a silicon-carbon composite active material, and more preferably, the carbon-based active material may include at least one selected from the group consisting of artificial graphite, natural graphite, soft carbon, and hard carbon, the silicon-based active material may include pure Si particles and/or $SiO_b$ (0<b≤2), and the silicon-carbon composite active material may include a Si-C composite. In addition, the negative electrode active material may be a mixed active material in which two or more of the above-described materials are mixed.

The negative electrode active material may be included in an amount of 60 wt% to 99 wt%, preferably 70 wt% or more, 80 wt% or more, 85 wt% or more, 90 wt% or more, and further 98 wt% or less, 97 wt% or less, or 95 wt% or less, with respect to a total weight of the negative electrode mixture layer.

The binder is a component for assisting in bonding between a conductive material, an active material, and a current collector, and may typically be added in an amount of an amount of 0.1 wt% to 10 wt% with respect to a total weight of the negative electrode mixture layer, and may be included in an amount of 0.2 wt% or more, 0.3 wt% or more, or 0.5 wt% or more, and further 8 wt% or less, or 5 wt% or less. Examples of the binder may include at least one selected from the group consisting of styrene-butadiene copolymer, acrylated styrene-butadiene copolymer, acrylonitrile-butadiene copolymer, acrylonitrile-butadiene-styrene copolymer, acrylic rubber, butyl rubber, polytetrafluoroethylene, polyethylene, polypropylene, ethylene propylene copolymer, polyethylene oxide, polyvinyl pyrrolidone, polyepichlorohydrin, polyphosphazene, polyacrylonitrile, polystyrene, ethylene propylene diene copolymer, polyvinyl pyridine, chlorosulfonated polyethylene, latex, polyester resin, acrylic resin, phenol resin, epoxy resin, and polyvinyl alcohol. Particularly, examples of the binder may include at least one selected from the group consisting of styrene-butadiene copolymer, acrylated styrene-butadiene copolymer, acrylonitrile-butadiene copolymer, acrylonitrile-butadiene-styrene copolymer, carboxymethyl cellulose, hydroxypropylmethyl cellulose, hydroxypropyl cellulose, diacetyl cellulose, cellulose acetate butylate, cellulose acetate propionate, cyanoethyl pullulan, cyanoethyl polyvinyl alcohol, cyanoethyl cellulose, and cyanoethyl sucrose Preferably, carboxymethyl cellulose, hydroxypropylmethyl cellulose, hydroxypropyl cellulose, or a mixture thereof is desirable. The conductive material is a component for further improving conductivity of the negative electrode active material, and may be included in an amount of 10 wt% or less, preferably 5 wt% or less, 3 wt% or less, 2 wt% or less, or 1 wt% or less, and further 0.01 wt% or more, 0.05 wt% or more, 0.08 wt% or more, 0.1 wt% or more, or 0.3 wt% or more, with respect to a total weight of the negative electrode mixture layer. Such conductive material is not particularly limited as long as it has conductivity without causing chemical changes in the battery, and for example, a conductive material, such as: graphite such as natural graphite and artificial graphite; carbon black such as acetylene black, Ketjen black, channel black, furnace black, lamp black, and thermal black; conductive fibers such as carbon-based fibers and metal-based fibers; carbon fluoride; metal powder such as aluminum powder, and nickel powder; conductive whiskers such as zinc oxide whiskers and potassium titanate whiskers; conductive metal oxide such as titanium oxide; or polyphenylene derivatives, or the like may be used.

The negative electrode mixture layer may be prepared by applying a negative electrode slurry composition, which is prepared by dissolving or dispersing a negative electrode active material and optionally a binder and a conductive material in a solvent, on a negative electrode current collector and drying the resulting product, or may be prepared by casting the negative electrode slurry composition on a separate support and then laminating a film separated from the support on the negative electrode current collector.

In the lithium secondary battery, a separator is to separate the negative electrode and the positive electrode and to provide a movement path for lithium ions. Any separator may be used without particular limitation as long as it is typically used as a separator in a lithium secondary battery. Particularly, a separator having high moisture-retention ability for an electrolyte as well as low resistance to the movement of electrolyte ions is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

The electrolyte used in the present invention may be an organic liquid electrolyte, an inorganic liquid electrolyte, a solid polymer electrolyte, a gel-type polymer electrolyte, a solid inorganic electrolyte, a molten-type inorganic electrolyte, and the like, all of which may be used in the preparation of a lithium secondary battery, but is not limited thereto.

The electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), the mixture which may increase charging/discharging performance of a battery, is more preferable.

Any compound may be used as the lithium salt without particular limitation as long as it may provide lithium ions used in a lithium secondary battery. To be specific, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_3)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$ may be used. The lithium salt may be preferably used in a concentration range of 0.1 M to 2.0 M. When the concentration of the lithium salt is included within the above range, the electrolyte has suitable conductivity and viscosity and may thus exhibit excellent performance, and lithium ions may effectively move.

In the electrolyte, in order to improve the lifespan properties of a battery, suppress the decrease in battery capacity, and improve the discharge capacity of the battery, one or more kinds of additives, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, and the like may be further included. In this case, the additive may be included in an amount of 0.1 wt% to 5 wt% with respect to a total weight of the electrolyte.

## Examples

Hereinafter, examples of the present invention will be described in detail in such a manner that it may easily be performed by a person skilled in the art to which the present invention pertains. The present invention may, however, be embodied in many different forms, and is not limited to examples set forth herein.

### Examples 1 to 6 and Comparative Examples 1 to 5.

A single particle-type lithium nickel-based oxide having particle size characteristic as described in Table 1, which had a composition of $LiNi_{0.6}Co_{0.1}Mn_{0.3}O_2$, was used as a positive electrode active material and carbon black having the characteristics described in Table 1 below was used to prepare positive electrodes of Examples 1 to 6 and Comparative Examples 1 to 5.

The positive electrode active material, carbon black, and a PVDF binder were mixed in an N-methylpyrrolidone solvent at a weight ratio of 97.0:1.2:1.8 to prepare a positive electrode slurry (5,000 mPa.s), and the slurry was applied onto one surface of an aluminum current collector, dried at 130 °C, and rolled at a nip pressure of 2,000 kgf/cm to prepare positive electrodes.

[Table 1]

| | Positiv e electro de active materia l $D_{50}$ | Positiv e electro de active materia l $D_{mean}$ | Carbon black Bulk density | Carbon black BET | Carbon black OAN | Rolling index |
|---|---|---|---|---|---|---|
| Example 1 | 3.91 | 2.05 | 0.12 | 299 | 314 | 0.244 |
| Example 2 | 3.91 | 2.05 | 0.11 | 302 | 320 | 0.217 |
| Example 3 | 3.91 | 2.05 | 0.14 | 590 | 211 | 0.214 |
| Example 4 | 3.91 | 2.05 | 0.12 | 867 | 252 | 0.105 |
| Example 5 | 3.91 | 2.05 | 0.13 | 1078 | 272 | 0.085 |
| Example 6 | 3.91 | 2.05 | 0.12 | 1284 | 336 | 0.053 |
| Comparative Example 1 | 3.91 | 2.05 | 0.09 | 58 | 202 | 1.465 |
| Comparative Example 2 | 3.91 | 2.05 | 0.13 | 122 | 183 | 1.111 |
| Comparative Example 3 | 3.91 | 2.05 | 0.15 | 39 | 140 | 5.240 |
| Comparative Example 4 | 3.91 | 2.05 | 0.02 | 1310 | 486 | 0.006 |
| Comparative Example 5 | 3.91 | 2.05 | 0.01 | 800 | 362 | 0.007 |

**Examples 7 to 10 and Comparative Examples 6 to 8**

A single particle-type lithium iron phosphate having particle size characteristic as described in Table 2, which had a composition of LiFePO$_4$, was used as a positive electrode active material and carbon black having the characteristics described in Table 2 below was used to prepare positive electrodes of Examples 7 to 10 and Comparative Examples 6 to 8.
The positive electrode active material, carbon black, and a PVDF binder were mixed in an N-methylpyrrolidone solvent at a weight ratio of 97.0:1.2:1.8 to prepare a positive electrode slurry (about 15,000 mPa.s), and the slurry was applied onto one surface of an aluminum current collector, dried at 130 °C, and rolled at a nip pressure of 2,000 kgf/cm to prepare positive electrodes.

[Table 2]

| | Positiv e electro de active materia l $D_{50}$ | Positiv e electro de active materia l $D_{mean}$ | Carbon black Bulk density | Carbon black BET | Carbon black OAN | Rolling index |
|---|---|---|---|---|---|---|
| Example 7 | 1.1 | 0.2 | 0.11 | 302 | 320 | 0.626 |
| Example 8 | 1.1 | 0.2 | 0.14 | 590 | 211 | 0.619 |
| Example 9 | 1.1 | 0.2 | 0.12 | 867 | 252 | 0.302 |
| Example 10 | 1.1 | 0.2 | 0.13 | 1078 | 272 | 0.244 |
| Comparative Example 6 | 1.1 | 0.2 | 0.09 | 58 | 202 | 4.225 |
| Comparative Example 7 | 1.1 | 0.2 | 0.13 | 122 | 183 | 3.203 |
| Comparative Example 8 | 1.1 | 0.2 | 0.15 | 39 | 140 | 15.110 |

Particle size characteristics of the positive electrode active material and physical properties of carbon black were measured through the following methods.

1) $D_{mean}$ (μm) is calculated by taking an average value of the particle sizes of individual nodules in approximately 30 particles containing at least one nodule, as captured by scanning electron microscopy (SEM) at 5.0 K magnification for positive electrode active material particles.

2) $D_{50}$ (μm) was measured in a way that the positive electrode active material powder was dispersed in a dispersion medium, the dispersion medium was introduced into a laser diffraction particle size measurement instrument (Microtrac MT 3000) and irradiated with ultrasonic waves having a frequency of about 28 kHz and an output of 60 W to obtain a volume accumulated particle size distribution graph, and the particle size at 50% of the volume accumulation is calculated.

3) Specific surface area ($m^2$/g) was measured through a BET method, and was calculated from an amount of nitrogen gas adsorbed at a liquid nitrogen temperature (77 K) using BELSORP-mino II from BEL JAPAN, INC.

4) Bulk density (g/$cm^3$) indicates a mass (g)-to-volume ($cm^3$) ratio of a point-type conductive material, and was measured under no external force applied.

5) Oil absorption number was derived as a value determined through a method described in JIS K6221-B using DBP (dibutyl phthalate) as oil and converted to an equivalent value under JIS K6217-4:2008 according to Equation (a) below.

$$[\text{Equation (a)}]$$

$$\text{DBP absorption} = (A-10.974)/0.7833$$

In Equation (a), A indicates a value of DBP absorption measured through a method described in JIS K6221-B.

**Experimental Example 1: Evaluation of electrode characteristics (porosity and rolling density)**

Rolling density was measured for a mixed powder of the positive electrode active material and carbon black from Examples and Comparative Examples using a density measuring device (Caver Pellet Press). Specifically, 3 g of a mixed powder of the positive electrode active material and carbon black from Examples and Comparative Examples was divided into small portions and packed into a cylindrical holder having a diameter of 13 mm, and then compressed under a pressure of 9 tonf to measure rolling density (g/cc).

Porosity was calculated through Mathematical Equation 1 below.

Porosity of positive electrode mixture layer after rolling (%) = {1 - (electrode density of positive electrode mixture layer after rolling/true density of positive electrode mixture layer)} ×100    [Mathematical Equation 1]

In Equation 1 above, the true density of the positive electrode mixture layer is density of a positive electrode mixture layer measured when the positive electrode mixture layer is taken to a predetermined size and pressed with press equipment until changes in thickness of the positive electrode mixture layer stop, and the electrode density of the positive electrode mixture layer after rolling is density of a positive electrode mixture layer measured when the positive electrode mixture layer is taken to a predetermined size after rolling.

[Table 3]

|  | Porosity (%) | Rolling density (g/cc) |
|---|---|---|
| Example 1 | 20.2 | 3.57 |
| Example 2 | 20.7 | 3.55 |
| Example 3 | 19.3 | 3.61 |
| Example 4 | 18.6 | 3.65 |
| Example 5 | 18.0 | 3.67 |
| Example 6 | 17.4 | 3.70 |
| Comparative Example 1 | 25.3 | 3.34 |
| Comparative Example 2 | 27.2 | 3.26 |
| Comparative Example 3 | 26.6 | 3.29 |
| Comparative Example 4 | 26.0 | 3.31 |
| Comparative Example 5 | 25.5 | 3.34 |

[Table 4]

|  | Porosity (%) | Rolling density (g/cc) |
|---|---|---|
| Example 7 | 19.1 | 2.54 |
| Example 8 | 18.9 | 2.51 |
| Example 9 | 19.5 | 2.59 |
| Example 10 | 19.3 | 2.57 |
| Comparative Example 6 | 24.1 | 2.35 |
| Comparative Example 7 | 23.9 | 2.31 |
| Comparative Example 8 | 23.7 | 2.33 |

Referring to Table 3 above, it is determined that Examples 1 to 6 satisfying the rolling index exhibited excellent rolling density, and carbon black was well disposed in pores between positive electrode active material particles and thus porosity was also achieved at a considerably low level.

Meanwhile, it is determined that in Comparative Examples 1 to 5 where the rolling index was less than 0.01 or greater than 1.00, properties of carbon black were not appropriate in relation to positive electrode active material particles, that is, specific surface area, OAN, and bulk density failed to form an appropriate relationship, and thus rolling density was evaluated to be low and porosity was evaluated to be high.

Referring to Table 4 above, it is determined that, similar to the results of Table 3 above, Examples 7 to 10 had a low porosity and a high rolling density compared to Comparative Examples 6 to 8.

**Experimental Example 2: Evaluation of battery performance**

A porous polyethylene separator was placed between the positive electrode and the negative electrode from Examples and Comparative Examples to prepare an electrode assembly, and the electrode assembly was placed inside a battery case. Thereafter, an electrolyte solution was injected to prepared a lithium secondary battery.

In this case, the electrolyte solution was prepared by dissolving 1 M $LiPF_6$ in an organic solvent with a volume ratio of ethylene carbonate/ethyl methyl carbonate/diethyl carbonate of 3:4:4, and the negative electrode was prepared as follows.

The negative electrode was prepared by adding artificial graphite as a graphite-based active material, carbon black as a conductive material, and CMC:SBR as a binder to distilled water at a weight ratio of 95.6:1.0:1.1:2.3 to prepare a negative electrode slurry having a solid content concentration of 45 wt%, and in this case, the conductive material and the binder were dispersed in water using a homogeneous mixer at 2,500 rpm for 30 minutes, and then the negative electrode active material was added and dispersed at 2,500 rpm for 30 minutes to prepare the negative electrode slurry.

The negative electrode slurry was applied onto a copper current collector (thickness: 8 $\mu$m) with a loading amount of 10.0 mg/cm$^2$, as a negative electrode current collector, and then roll pressed and dried in a vacuum oven at 130 °C for 10 hours to prepare a negative electrode.

The lithium secondary battery was charged up to 4.2 V at a C-rate of 0.1 C and then discharged up to 2.5 V to perform an activation process.

Each lithium secondary battery prepared above was charged up to 4.25 V in CCCV mode at 0.2 C (end current: 1/20 C). Thereafter, the lithium secondary battery was charged up to 4.25 V at a constant current of 0.33 C at 45 °C, and discharged up to 2.5 V at a constant current of 0.33 C, which was set as one cycle, and charge capacity and discharge capacity were measured during 100 charge-discharge cycles. Using the measurement results, capacity retention was calculated as follows and shown in Tables 5 and 6 below.

Capacity retention (%): = (discharge capacity after 100 cycles/discharge capacity after 1 cycle) $\times$100

[Table 5]

|  | Capacity retention (%) |
|---|---|
| Example 1 | 95.1 |
| Example 2 | 94.3 |
| Example 3 | 95.7 |

(continued)

|  | Capacity retention (%) |
|---|---|
| Example 4 | 94.3 |
| Example 5 | 93.8 |
| Example 6 | 93.1 |
| Comparative Example 1 | 84.4 |
| Comparative Example 2 | 80.5 |
| Comparative Example 3 | 81.7 |
| Comparative Example 4 | 88.8 |
| Comparative Example 5 | 86.9 |

[Table 6]

|  | Capacity retention (%) |
|---|---|
| Example 7 | 92.5 |
| Example 8 | 92.2 |
| Example 9 | 91.8 |
| Example 10 | 92.4 |
| Comparative Example 6 | 87.9 |
| Comparative Example 7 | 87.2 |
| Comparative Example 8 | 87.8 |

Referring to Table 5 above, it is determined that Examples 1 to 6 satisfying the rolling index exhibited excellent lifespan characteristics because side reactions caused by breakage of active material particles were significantly reduced despite reduced porosity leading to increased energy density.

However, it may be understood that Comparative Examples 1 to 3 having a high rolling index have relatively a smaller number of conductive materials than Examples, indicating fewer conductive paths formed, and it may be understood that Comparative Examples 4 and 5 having a low rolling index have relatively longer conductive paths than Examples due to an increase in porosity of the electrode caused by the failure to reduce the porosity of the conductive material itself and micropores in the electrode. Consequently, Comparative Examples with shorter or longer conductive paths than Examples may experience faster battery degradation, as evidenced by the lower capacity retention.

In addition, referring to Table 6 above, it is determined that the results exhibit the same tendency as those presented in Table 5 for both Examples and Comparative Examples.

That is, when a positive electrode is prepared by applying a positive electrode active material and a conductive material such that the rolling index according to an embodiment of the present invention is satisfied, it is determined that the porosity of the electrode may be reduced and roll pressing may be performed under a high rolling density, and thus a short and dense conductive path is formed, thereby improving lifespan characteristics, and accordingly, it is expected that battery output may also be improved due to enhanced resistance characteristics of the electrode.

## Claims

1. A positive electrode having a positive electrode mixture layer, comprising a single particle-type positive electrode active material and a point-type conductive material, disposed on a current collector, and having a rolling index of 0.01 to 1.00, indicated by Equation 1 below:

[Equation 1]

$$RI = [(D_{50}/D_{mean}) \times B_c] / (S_c \times O_c) \times 10^5$$

wherein in Equation 1 above,

$D_{mean}$ is an average particle size ($\mu$m) of nodules measured from a scanning electron microscope image of the single particle-type positive electrode active material,

$D_{50}$ is an average particle size ($\mu$m) at 50% cumulative volume in a particle size distribution graph obtained through a laser diffraction method for the single particle-type positive electrode active material,

$B_c$ is a bulk density of the point-type conductive material, given as a unitless number without a bulk density unit of $g/cm^3$,

$S_c$ is a BET specific surface area of the point-type conductive material, given as a unitless number without a specific surface area unit of $m^2/g$, and

$O_c$ is an oil absorption number (OAN) of the point-type conductive material, given as a unitless number without an oil absorption number unit of ml/100 g.

2. The positive electrode of claim 1, wherein the single particle-type positive electrode active material has a $D_{50}$ of 2.0 $\mu$m to 6.0 $\mu$m.

3. The positive electrode of claim 1, wherein the single particle-type positive electrode active material has a $D_{mean}$ of 0.2 $\mu$m to 3.0 $\mu$m.

4. The positive electrode of claim 1, wherein the single particle-type positive electrode active material has a $D_{50}/D_{mean}$ of 1 to 10.

5. The positive electrode of claim 1, wherein the point-type conductive material has a BET specific surface area of 290 $m^2/g$ to 1300 $m^2/g$.

6. The positive electrode of claim 1, wherein the point-type conductive material has an oil absorption number of 250 ml/100 g to 500 ml/100 g.

7. The positive electrode of claim 1, wherein the point-type conductive material has a bulk density of 0.05 $cm^3/g$ to 0.14 $cm^3/g$.

8. The positive electrode of claim 1, wherein the single particle-type positive electrode active material comprises at least one selected from the group consisting of a lithium nickel-based oxide and a lithium metal phosphate-based compound,

the lithium nickel-based oxide having a composition represented by Formula 1 below, and
the lithium metal phosphate-based compound having a composition represented by Formula 2 below:

$$[Formula\ 1] \qquad Li_{1+x}Ni_aCo_bM^1_cM^2_dO_{2-e}X_e$$

wherein in Formula 1 above, $M^1$ comprises at least one selected from Mn and Al, $M^2$ comprises at least one selected from the group consisting of W, Zr, Y, Ba, Ca, Ti, V, Mg, Ta, and Nb, X comprises at least one selected from the group consisting of N, P, S, F, and Cl, and x, a, b, c, d, and e satisfy $0 \leq x \leq 0.1$, $0.5 \leq a < 1$, $0 < b \leq 0.35$, $0 < c \leq 0.35$, $0 \leq d \leq 0.05$, and $0 \leq e \leq 0.05$, and

$$[Formula\ 2] \qquad Li_{1+x}[Fe_{1-y}M_y]PO_4$$

wherein in Formula 2 above, M comprises at least one selected from the group consisting of Mn, Co, Ni, Al, Mg, and Ti, and x and y satisfy $-0.5 \leq x \leq 0.5$ and $0 \leq y < 1$.

9. The positive electrode of claim 1, wherein the point-type conductive material comprises carbon black.

10. The positive electrode of claim 1, wherein the positive electrode has a porosity of 12.0% to 22.0%.

11. The positive electrode of claim 1, wherein the single particle-type lithium nickel-based oxide is provided in an amount of 93.0 wt% to 99.0 wt% with respect to a total weight of the positive electrode mixture layer.

12. The positive electrode of claim 1, wherein the positive electrode mixture layer further comprises a binder.

**13.** A lithium secondary battery comprising the positive electrode of claim 1.

## INTERNATIONAL SEARCH REPORT

| | International application No. |
|---|---|
| | **PCT/KR2024/014709** |

### A. CLASSIFICATION OF SUBJECT MATTER

**H01M 4/131**(2010.01)i; **H01M 4/525**(2010.01)i; **H01M 4/505**(2010.01)i; **H01M 4/62**(2006.01)i; **H01M 10/052**(2010.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/131(2010.01); B82Y 30/00(2011.01); C01G 53/00(2006.01); H01M 10/052(2010.01); H01M 4/36(2006.01); H01M 4/525(2010.01); H01M 50/533(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 단입자(single particle), 압연 지수(Rolling Index), 입경(particle size), 오일 흡수 넘버(oil absorption number), 카본 블랙 (carbon black), 벌크 밀도(bulk density), BET 비표면적(BET surface area)

### C. DOCUMENTS CONSIDERED TO BE RELEVANT

| Category* | Citation of document, with indication, where appropriate, of the relevant passages | Relevant to claim No. |
|---|---|---|
| Y | KR 10-2023-0107145 A (LG ENERGY SOLUTION, LTD.) 14 July 2023 (2023-07-14) See claims 1, 2, 5, 6, 9 and 12; and paragraphs [0069]-[0072], [0082], [0184], [0189] and [0191]-[0194]. | 1-13 |
| Y | KR 10-2018-0000343 A (CABOT CORPORATION) 02 January 2018 (2018-01-02) See paragraphs [0021], [0042], [0067], [0085], [0093] and [0101]-[0103]. | 1-13 |
| Y | KR 10-2023-0054601 A (LG ENERGY SOLUTION, LTD.) 25 April 2023 (2023-04-25) See claims 1 and 2; and paragraphs [0110] and [0118]. | 10 |
| A | KR 10-2013-0094286 A (MITSUBISHI CHEMICAL CORPORATION) 23 August 2013 (2013-08-23) See abstract; and claims 1-35. | 1-13 |
| A | JP 2022-553657 A (SVOLT ENERGY TECHNOLOGY CO., LTD.) 26 December 2022 (2022-12-26) See abstract; and claims 1-20. | 1-13 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **09 January 2025** | **09 January 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/014709**

| Patent document cited in search report | | | Publication date (day/month/year) | Patent family member(s) | | | Publication date (day/month/year) |
|---|---|---|---|---|---|---|---|
| KR | 10-2023-0107145 | A | 14 July 2023 | CN | 118511323 | A | 16 August 2024 |
| | | | | EP | 4443563 | A1 | 09 October 2024 |
| | | | | JP | 2024-545475 | A | 06 December 2024 |
| | | | | US | 2023-0223526 | A1 | 13 July 2023 |
| | | | | WO | 2023-132685 | A1 | 13 July 2023 |
| KR | 10-2018-0000343 | A | 02 January 2018 | CA | 2715309 | A1 | 27 August 2009 |
| | | | | CN | 102007186 | A | 06 April 2011 |
| | | | | CN | 102007186 | B | 22 January 2014 |
| | | | | EP | 2257602 | A2 | 08 December 2010 |
| | | | | EP | 2257602 | B1 | 17 October 2018 |
| | | | | EP | 3287496 | A1 | 28 February 2018 |
| | | | | EP | 3287496 | B1 | 19 December 2018 |
| | | | | JP | 2011-515507 | A | 19 May 2011 |
| | | | | JP | 2015-071784 | A | 16 April 2015 |
| | | | | JP | 2017-052967 | A | 16 March 2017 |
| | | | | JP | 6230524 | B2 | 15 November 2017 |
| | | | | KR | 10-2010-0116623 | A | 01 November 2010 |
| | | | | KR | 10-2015-0117706 | A | 20 October 2015 |
| | | | | KR | 10-2027915 | B1 | 02 October 2019 |
| | | | | TW | 200946603 | A | 16 November 2009 |
| | | | | TW | I444442 | B | 11 July 2014 |
| | | | | US | 10087330 | B2 | 02 October 2018 |
| | | | | US | 2009-0208751 | A1 | 20 August 2009 |
| | | | | WO | 2009-105172 | A2 | 27 August 2009 |
| | | | | WO | 2009-105172 | A3 | 30 December 2009 |
| KR | 10-2023-0054601 | A | 25 April 2023 | KR | 10-2686803 | B1 | 22 July 2024 |
| KR | 10-2013-0094286 | A | 23 August 2013 | CN | 103003983 | A | 27 March 2013 |
| | | | | EP | 2595221 | A1 | 22 May 2013 |
| | | | | EP | 2595221 | A4 | 26 March 2014 |
| | | | | JP | 2012-038724 | A | 23 February 2012 |
| | | | | US | 2013-0130113 | A1 | 23 May 2013 |
| | | | | WO | 2012-008532 | A1 | 19 January 2012 |
| JP | 2022-553657 | A | 26 December 2022 | CN | 111598911 | A | 28 August 2020 |
| | | | | CN | 111598911 | B | 04 December 2020 |
| | | | | CN | 111916697 | A | 10 November 2020 |
| | | | | CN | 111916697 | B | 21 September 2021 |
| | | | | CN | 111916723 | A | 10 November 2020 |
| | | | | CN | 111916723 | B | 17 August 2021 |
| | | | | CN | 113662915 | A | 19 November 2021 |
| | | | | CN | 113662915 | B | 28 November 2023 |
| | | | | EP | 4024520 | A1 | 06 July 2022 |
| | | | | EP | 4024520 | A4 | 03 January 2024 |
| | | | | EP | 4024523 | A1 | 06 July 2022 |
| | | | | JP | 2022-553638 | A | 26 December 2022 |
| | | | | JP | 7368613 | B2 | 24 October 2023 |
| | | | | JP | 7392132 | B2 | 05 December 2023 |
| | | | | KR | 10-2022-0091541 | A | 30 June 2022 |
| | | | | KR | 10-2022-0103763 | A | 22 July 2022 |
| | | | | US | 2023-0024237 | A1 | 26 January 2023 |
| | | | | US | 2023-0025787 | A1 | 26 January 2023 |

Form PCT/ISA/210 (patent family annex) (July 2022)

EP 4 657 543 A1

| INTERNATIONAL SEARCH REPORT<br>Information on patent family members | | International application No.<br>**PCT/KR2024/014709** | |
|---|---|---|---|
| Patent document<br>cited in search report | Publication date<br>(day/month/year) | Patent family member(s) | Publication date<br>(day/month/year) |
| | | WO 2022-011932 A1 | 20 January 2022 |
| | | WO 2022-011939 A1 | 20 January 2022 |
| | | WO 2022-011967 A1 | 20 January 2022 |
| | | WO 2022-012304 A1 | 20 January 2022 |
| | | WO 2022-012480 A1 | 20 January 2022 |
| | | WO 2022-012583 A1 | 20 January 2022 |